# DEMANDE DE BREVET EUROPEEN

(11) **EP 2 413 260 A1**
(43) Date de publication de la demande: **01.02.2012**
(21) Numéro de dépôt: 11305969.5
(22) Date de dépôt: 26.07.2011
(51) Int. Cl.: G06F 21/00, H04L 29/06

(54) **Téléphone mobile muni d'un système sécurisé d'identification**

(30) Priorité: 29.07.2010 FR 1056260
(71) Demandeur: Myriad Group AG, 8001 Zürich (CH)
(72) Inventeur: Philbert, Jérôme, 38400 SAINT MARTIN D'HERES (FR); Makhoul, Charbel, 73000 CHAMBERY (FR)
(74) Mandataire: Domenego, Bertrand

(57) **Abrégé**

L'invention a pour objet un téléphone mobile du type comprenant
- des moyens de connexion, propres à permettre la connexion à une page Internet d'URL déterminée, la connexion à ladite page Internet requérant la saisie d'un identifiant particulier propre à ladite page Internet,
- des premiers moyens de stockage (17), propres à stocker dans une base de données (20) les identifiants particuliers, associés chacun à une page Internet correspondante.

Le téléphone mobile comprend en outre
- des moyens de déclenchement (24) propres à déclencher systématiquement et automatiquement, à l'issue de la saisie d'un identifiant particulier, la mise en oeuvre de moyens de choix (34) d'un identifiant principal commun à toutes les pages Internet requérant la saisie d'un identifiant particulier, si aucun identifiant principal n'a encore été choisi, et
- des deuxièmes moyens de stockage propres à stocker une donnée de sécurité dépendant de l'identifiant principal à l'issue de la saisie de l'identifiant principal.

## Description

La présente invention concerne un téléphone mobile du type comprenant :
- des moyens de connexion, propres à permettre la connexion à une page Internet d'URL déterminée, la connexion à ladite page Internet requérant la saisie d'un identifiant particulier propre à ladite page Internet,
- des premiers moyens de stockage, propres à stocker dans une base de données les identifiants particuliers, associés chacun à une page Internet correspondante.

Certaines pages Internet, telles que des pages de messagerie, sont des pages à accès restreint et ne sont accessibles à un utilisateur qu'après saisie d'un identifiant particulier, propre à cette page. Certains navigateurs web, installés sur des téléphones mobiles, proposent à l'utilisateur de mémoriser l'identifiant particulier, associé à l'adresse de la page, dans une base de données stockée dans la mémoire du téléphone. Ainsi, lors de connexions ultérieures à cette page, l'utilisateur n'a pas à saisir son identifiant particulier, celui-ci étant inséré automatiquement par le téléphone mobile. Son confort de navigation est ainsi augmenté.

Une telle solution ne donne cependant pas entière satisfaction. En effet, les identifiants particuliers constituent des données sensibles. Or, les navigateurs web installés sur les téléphones mobiles et fonctionnant, en particulier, sous un système d'exploitation Android, enregistrent les identifiants particuliers de manière peu sécurisée. Ainsi, une personne mal intentionnée entrée en possession du téléphone mobile peut, en se connectant à une page d'accès restreint, accéder à cette page sans connaître l'identifiant particulier associé à cette page, ce dernier étant proposé automatiquement par le téléphone.

Un objet de l'invention est de proposer un téléphone mobile offrant une sécurisation importante des données d'identification, tout en étant simple et convivial d'utilisation.

A cet effet, l'invention a pour objet un téléphone mobile du type précité, caractérisé en ce que le téléphone comprend en outre
- des moyens de déclenchement propres à déclencher systématiquement et automatiquement, à l'issue de la saisie d'un identifiant particulier, la mise en oeuvre de moyens de choix d'un identifiant principal commun à toutes les pages Internet requérant la saisie d'un identifiant particulier, si aucun identifiant principal n'a encore été choisi, et
- des deuxièmes moyens de stockage propres à stocker une donnée de sécurité dépendant de l'identifiant principal à l'issue de la saisie de l'identifiant principal.

Suivant des modes particuliers de réalisation, le téléphone mobile selon l'invention peut également comprendre l'une ou plusieurs des caractéristiques suivantes, prise(s) isolément ou selon toute(s) combinaison(s) techniquement possible(s) :
- le téléphone mobile comprend des moyens de mémorisation de l'identifiant particulier, propres à mémoriser l'identifiant particulier seulement si l'identifiant principal a été choisi et à engendrer le stockage dans la base de données de l'identifiant particulier mémorisé par les premiers moyens de stockage ;
- les moyens de déclenchement sont en outre propres à déclencher systématiquement et automatiquement la mise en oeuvre de moyens de saisie de l'identifiant principal à l'issue de la saisie d'un identifiant particulier non encore stocké dans la base de données et si l'identifiant principal a déjà été choisi, et le téléphone mobile comprend des moyens de mémorisation de l'identifiant particulier propres à mémoriser l'identifiant particulier seulement si l'identifiant principal a été saisi et à engendrer le stockage dans la base de données de l'identifiant particulier mémorisé par les premiers moyens de stockage ;
- le téléphone mobile comprend des moyens de recherche, propres à déterminer la présence dans la base de données de la page Internet à laquelle les moyens de connexion sont connectés, et donc de l'identifiant particulier associé, les moyens de recherche étant propres à déclencher la mise en oeuvre de moyens de saisie de l'identifiant particulier si l'identifiant particulier associé à la page Internet n'est pas stocké dans la base de données et la mise en oeuvre des moyens de saisie de l'identifiant principal sans mise en oeuvre préalable des moyens de saisie de l'identifiant particulier sinon ;
- le téléphone mobile comprend des moyens d'activation de session comprenant une horloge, propre à déterminer une durée écoulée depuis la dernière saisie d'un identifiant principal, des moyens de comparaison du temps écoulé déterminé par l'horloge avec un temps prédéterminé, les moyens d'activation de session étant propres à donner l'identifiant particulier sans saisie préalable de l'identifiant principal si le temps écoulé est inférieur au temps prédéterminé ;
- le téléphone mobile comprend un module de modification de l'identifiant principal, propre à être mis en oeuvre lors de la mise en oeuvre des moyens de saisie de l'identifiant principal ;
- les moyens de déclenchement sont en outre propres à déclencher automatiquement la mise en oeuvre de moyens d'interrogation quant à la mémorisation de l'identifiant particulier saisi avant la mise en oeuvre des moyens de choix de l'identifiant principal ;
- les identifiants particuliers sont stockés dans la base de données sous forme chiffrée à l'aide d'une clef de chiffrement aléatoire ;
- le téléphone mobile comprend des moyens de génération de la donnée de sécurité, propres à chiffrer la clef de chiffrement de l'identifiant particulier à l'aide de l'identifiant principal, de manière à générer la donnée de sécurité stockée par les deuxièmes moyens de stockage ;
- le téléphone mobile comprend des moyens de chiffrement propres à chiffrer l'identifiant particulier, mémorisé par les moyens de mémorisation, au moyen de la clef de chiffrement aléatoire, la clef de chiffrement aléatoire ayant préalablement été déchiffrée à partir de la donnée de sécurité à l'aide de l'identifiant principal saisi ; et
- le téléphone mobile comprend une carte SIM et les premiers et deuxièmes moyens de stockage sont prévus sur la carte SIM.

L'invention a également pour objet un procédé mis en oeuvre par le téléphone mobile tel que défini ci-dessus, comprenant successivement les étapes consistant à :
- se connecter par l'intermédiaire des moyens de connexion du téléphone mobile à une page Internet ayant une URL déterminée et requérant la saisie d'un identifiant particulier ;
- déclencher la mise en oeuvre de moyens de choix d'un identifiant principal à l'issue de la saisie d'un identifiant particulier, si aucun identifiant principal n'a encore été choisi ; et
- à l'issue de la saisie de l'identifiant principal, stocker à l'aide des deuxièmes moyens de stockage une donnée de sécurité dépendant de l'identifiant principal.

Suivant un mode particulier de réalisation, le procédé selon l'invention comprend, avant la mise en oeuvre des moyens de choix de l'identifiant principal, une étape consistant à déclencher la mise en oeuvre de moyens d'interrogation, proposant à l'utilisateur de mémoriser l'identifiant particulier saisi.

L'invention a également pour objet un produit programme d'ordinateur comportant des instructions qui, lorsque mises en oeuvre par un calculateur intégré à un téléphone mobile, met en oeuvre le procédé tel que défini ci-dessus.

L'invention sera mieux comprise à la lecture de la description qui va suivre, donnée uniquement à titre d'exemple et faite en se référant aux dessins annexés, sur lesquels :
- la figure 1 est une représentation schématique d'un téléphone mobile selon l'invention ;
- les figures 2 et 3 sont des représentations schématiques sous forme de modules fonctionnels de moyens mis en oeuvre par le téléphone de la figure 1 ;
- les figures 4 à 23 sont des vues de l'écran du téléphone lors d'étapes successives du procédé de connexion à une page d'accès restreint dans différentes situations ;
- les figures 24 à 26 représentent des fenêtres de modification d'un identifiant principal ;
- la figure 27 est un organigramme représentant le procédé de connexion à une page d'accès restreint ;
- la figure 28 est un organigramme représentant le procédé d'authentification de l'identifiant principal saisi à l'aide d'une donnée de sécurité ; et
- la figure 29 est un diagramme représentant le procédé de génération de la donnée de sécurité à partir d'un identifiant principal choisi.

L'invention s'applique en particulier à un téléphone mobile 2 fonctionnant sous un système d'exploitation Android® de la société Google.

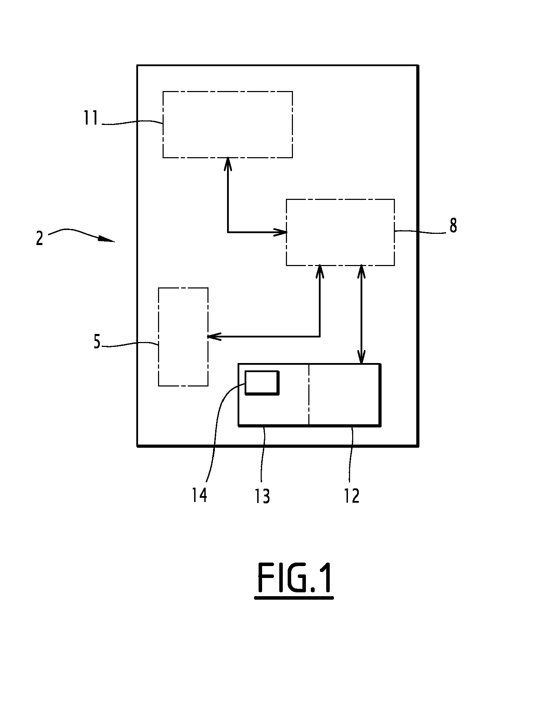

La figure 1 représente schématiquement un téléphone mobile 2 selon l'invention. Le téléphone mobile 2 est muni d'une carte SIM 5 ("Subscriber Identity Module") amovible, propre à interagir avec un microprocesseur 8 du téléphone mobile 2. Il comprend en outre une interface homme-machine 11, telle qu'un écran et un clavier, propre à permettre une interaction entre le téléphone mobile 2 et l'utilisateur, ainsi qu'une mémoire, comprenant une mémoire vive 12 et une mémoire non volatile 13, encore appelée mémoire ROM.

Le téléphone 2 comporte des moyens de connexion à un réseau informatique, en particulier le réseau Internet, aptes à se connecter à des pages Internet choisies par l'utilisateur. Ces pages Internet sont définies par leur URL (« Uniform resource locator » en anglais). Les moyens de connexion comprennent en particulier un navigateur web 14.

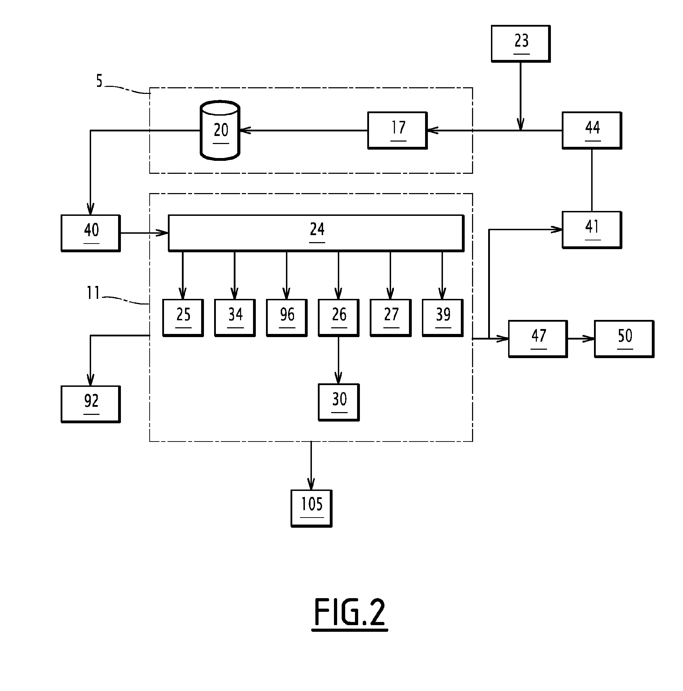

La figure 2 représente sous la forme de modules fonctionnels des moyens mis en oeuvre par le téléphone mobile 2 de la figure 1, et participant à la sécurisation des identifiants propres à l'utilisateur du téléphone 2, ainsi qu'à la convivialité d'utilisation du téléphone 2.

Des premiers moyens de stockage 17 sont propres à stocker, dans une base de données 20, des identifiants particuliers enregistrés par l'utilisateur, associés aux URL correspondantes. Les premiers moyens de stockage 17 sont prévus sur la carte SIM 5 du téléphone 2, en particulier dans une partition sécurisée de celle-ci. Dans la base de données 20, les identifiants particuliers sont stockés sous forme chiffrée par des moyens de chiffrement 23 à l'aide d'une clef de chiffrement aléatoire. Les URL associées sont stockées sous forme non chiffrée.

Dans la suite de la description, on appelle page à accès restreint une page Internet dont le contenu n'est accessible qu'après la saisie par un utilisateur d'un identifiant particulier, propre à la page. Ces pages à accès restreint sont par exemple des pages de messagerie ou des pages d'accès à des réseaux sociaux. L'identifiant particulier comprend notamment un nom d'utilisateur et un mot de passe. En outre, on appelle identifiant principal un identifiant choisi par l'utilisateur et unique pour toutes les pages à accès restreint. Dans la suite, des moyens de saisie de l'identifiant principal et de l'identifiant particulier seront décrits.

L'interface homme-machine 11 comprend des moyens de déclenchement 24, propres à déclencher automatiquement la mise en oeuvre de moyens de saisie ou d'interrogation, en fonction de la nature de l'information reçue en entrée des moyens de déclenchement 24.

Ainsi, les moyens de déclenchement 24 sont aptes à déclencher automatiquement, dès que le navigateur web 14 se connecte à une page à accès restreint, dont l'identifiant particulier n'est pas encore stocké dans la base de données 20, la mise en oeuvre de moyens 25 de saisie de l'identifiant particulier.

Les moyens de déclenchement 24 sont également aptes à déclencher automatiquement et systématiquement, immédiatement après la saisie par l'utilisateur de l'identifiant particulier, la mise en oeuvre de moyens d'interrogation 26 quant à la mémorisation par le téléphone 2 de l'identifiant particulier saisi.

Si aucun identifiant principal n'a encore été choisi par l'utilisateur, les moyens de déclenchement 24 sont propres à déclencher la mise en oeuvre de moyens de choix 34 de l'identifiant principal, automatiquement et systématiquement à l'issue de la saisie de l'identifiant particulier par l'utilisateur. Les moyens de choix 34 de l'identifiant principal sont en particulier mis en oeuvre par les moyens de déclenchement 24 en cas de réponse positive de l'utilisateur quant à la mémorisation de l'identifiant particulier.

Si l'identifiant principal a déjà été choisi, les moyens de déclenchement 24 sont également aptes à déclencher automatiquement et systématiquement, soit immédiatement après la saisie par l'utilisateur de l'identifiant particulier et en cas de réponse positive de l'utilisateur quant à la mémorisation de l'identifiant particulier saisi, soit dans le cas où l'identifiant particulier est déjà stocké dans la base de données 20, la mise en oeuvre de moyens de saisie 27 d'un identifiant principal.

Ainsi, les moyens de déclenchement 24 sont propres à déclencher successivement et automatiquement la mise en oeuvre des moyens de saisie 25 de l'identifiant particulier et des moyens de choix 34 ou de saisie 27 de l'identifiant principal si l'utilisateur choisit de mémoriser l'identifiant particulier.

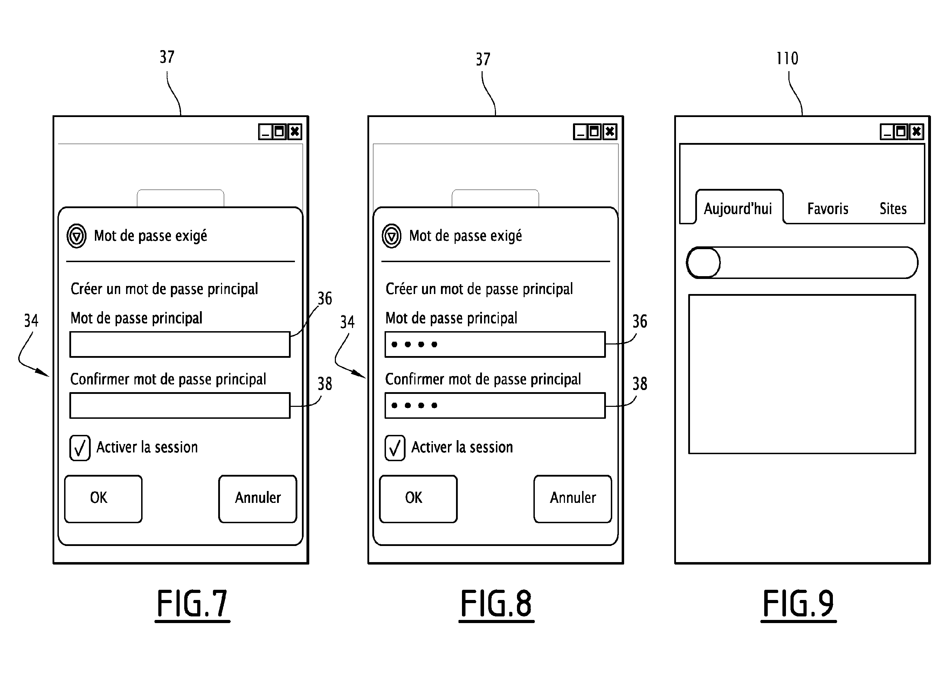

Dans le mode de réalisation représenté, les moyens de saisie 25 de l'identifiant particulier et les moyens de saisie 27 de l'identifiant principal comprennent respectivement une zone de saisie 28 de l'identifiant particulier et une zone de saisie 36 de l'identifiant principal. Les zones de saisie 28 et 36 sont prévues respectivement dans une fenêtre 29 de saisie de l'identifiant particulier, et dans une fenêtre 35 de saisie de l'identifiant principal. Les moyens de choix 34 de l'identifiant principal sont prévus dans une fenêtre de saisie initiale 37 (figure 7). Ils comprennent une zone de saisie 36 de l'identifiant principal et une zone de confirmation 38 de l'identifiant principal, destinée également à recevoir l'identifiant principal saisi par l'utilisateur, à titre de confirmation. Les fenêtres 29 et 35 ou 37 s'affichent successivement et automatiquement à la suite l'une de l'autre. Ce sont par exemple des fenêtres pop-up, encore appelées fenêtres intruses. Dans ce mode de réalisation, les moyens d'interrogation 26 sont prévus, soit dans la fenêtre de saisie 29 de l'identifiant particulier, soit dans une fenêtre de dialogue 32 séparée, propre à s'afficher après la saisie de l'identifiant particulier et avant la saisie ou le choix de l'identifiant principal.

Enfin, les moyens de déclenchement 24 sont aptes à déclencher l'affichage d'une fenêtre 39 préremplie avec l'identifiant particulier, extrait de la base de données 20.

Les moyens de déclenchement 24 sont connectés en entrée à un module de recherche 40, propre à rechercher l'URL active, c'est-à-dire l'URL de la page à laquelle le navigateur 14 est connecté, dans la base de données 20. Le module de recherche 40 est ainsi propre à comparer l'URL active aux URL stockées dans la base de données 20. Il est propre à activer le déclenchement, par les moyens de déclenchement 24, de la mise en oeuvre des moyens de saisie 25 de l'identifiant particulier si l'URL active n'est pas stockée dans la base de données 20 et, dans le cas contraire, à activer le déclenchement, par les moyens de déclenchement 24, de la mise en oeuvre des moyens de saisie 27 de l'identifiant principal.

Le téléphone mobile 2 comprend également un module d'authentification 41. Le module d'authentification 41 est propre à vérifier l'exactitude de l'identifiant principal saisi, c'est-à-dire à authentifier l'identifiant principal saisi, et à autoriser, en cas d'authentification positive, l'accès à la page active.

Le module d'authentification 41 est connecté en sortie à des moyens de mémorisation 44, propres à mémoriser l'identifiant particulier saisi si le module d'authentification 41 a authentifié l'identifiant principal saisi. Les moyens de mémorisation 44 sont connectés en sortie aux premiers moyens de stockage 17. Ces premiers moyens de stockage 17 sont aptes à stocker sous forme chiffrée dans la base de données 20, l'identifiant particulier mémorisé par les moyens de mémorisation 44.

Selon un mode de réalisation, le téléphone 2 comprend en outre des moyens d'activation de session 47. Les moyens d'activation de session 47 sont propres à recevoir de l'interface homme-machine 11 une instruction d'activation de session lorsque l'utilisateur active une option d'activation de session, prévue par exemple dans la fenêtre de saisie 35 de l'identifiant principal ou dans la fenêtre de saisie initiale 37. Une session correspond à une durée prédéterminée de session à partir de la saisie de l'identifiant principal, pendant laquelle il n'est pas demandé à l'utilisateur de saisir à nouveau l'identifiant principal. Cette durée est par exemple de trente minutes. Lorsqu'ils ont reçu une instruction d'activation de session, les moyens d'activation de session 47 sont propres à déclencher une horloge 50, propre à compter le temps écoulé depuis la dernière saisie de l'identifiant principal. Les moyens d'activation de session 47 sont en outre propres à commander l'enregistrement de la clef de chiffrement des identifiants particuliers dans la mémoire vive 12 du téléphone mobile 2, puis son effacement de la mémoire vive 12 lorsque la durée prédéterminée de session est écoulée. En variante, la clef de chiffrement est toujours dans la mémoire vive 12 du téléphone 2 et la clef de chiffrement est rendue accessible pour le déchiffrement d'un identifiant particulier lors de l'activation d'une session, sans que l'identifiant principal ne doive être ressaisi.

Ainsi, les moyens d'activation de session 47 sont propres à fournir l'identifiant particulier, déchiffré à partir de la base de données 20 à l'aide de la clef de chiffrement mémorisée, sans saisie préalable de l'identifiant principal.

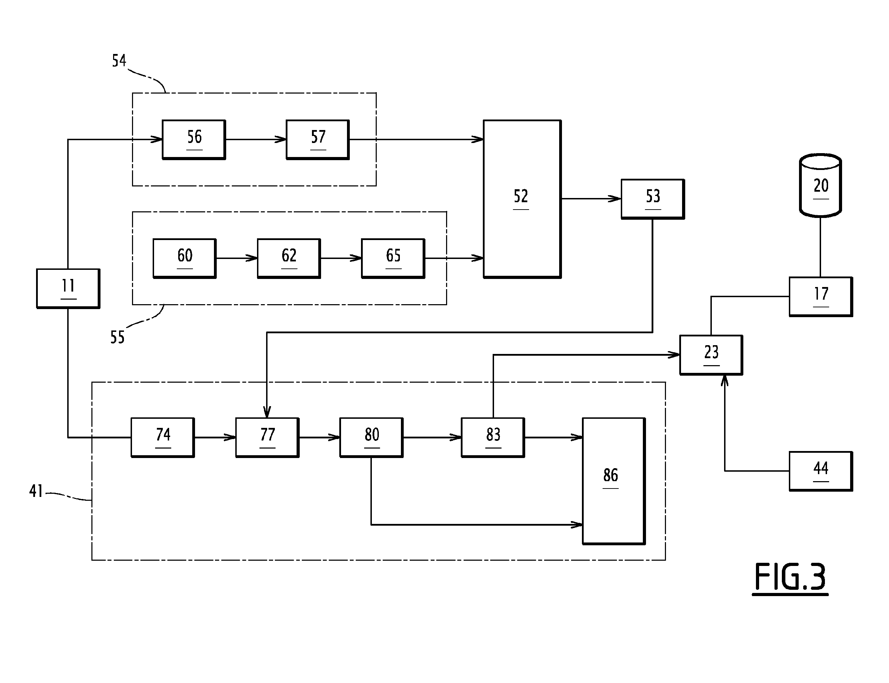

Des moyens de génération 52 d'une donnée de sécurité, représentés sur la figure 3, sont propres à fournir, à partir de l'identifiant principal choisi par l'utilisateur, une donnée de sécurité, stockée dans des deuxièmes moyens de stockage 53. La donnée de sécurité contient la clef de chiffrement des identifiants particuliers.

Les moyens de génération 52 de la donnée de sécurité sont connectés en entrée à des moyens 54 d'acquisition et de traitement de l'identifiant principal, propres à recevoir un identifiant principal par l'intermédiaire de l'interface homme-machine 11 et à fournir en sortie un identifiant principal haché. Ils sont également connectés en entrée à des moyens 55 de génération et de traitement de la clef de chiffrement, propres à fournir une clef de chiffrement aléatoire signée.

Les moyens 54 d'acquisition et de traitement de l'identifiant principal comprennent un module 56 d'acquisition de l'identifiant principal, propre à recevoir l'identifiant principal saisi par l'utilisateur, lorsque celui-ci est choisi par l'utilisateur, c'est-à-dire saisi pour la première fois ou lorsqu'un nouvel identifiant principal est saisi en cas de modification de l'identifiant principal par l'utilisateur. Ils comprennent en outre un premier module de hachage 57, propre à appliquer une première fonction de hachage à l'identifiant principal choisi et à fournir en sortie un identifiant principal haché. Dans le mode de réalisation décrit, l'identifiant principal comporte quatre caractères ; la première fonction de hachage est une fonction de type MD5 et l'identifiant principal haché comporte 128 bits.

Les moyens 55 de génération et de traitement de la clef de chiffrement comprennent un générateur aléatoire 60, propre à générer aléatoirement la clef de chiffrement, et un second module de hachage 62, propre à appliquer une seconde fonction de hachage à la clef de chiffrement pour fournir une clef de chiffrement hachée, encore appelée signature de la clef de chiffrement. Un calculateur 65 est apte à concaténer la clef de chiffrement avec sa signature de manière à fournir une clef de chiffrement signée. Dans le mode de réalisation décrit, la clef de chiffrement comporte 128 bits ; la seconde fonction de hachage est une fonction de type SHA-1 et la signature de la clef de chiffrement comporte 160 bits.

Les moyens de génération 52 de la donnée de sécurité sont propres à chiffrer la clef de chiffrement signée reçue des moyens 55 de génération et de traitement de la clef de chiffrement à l'aide d'un algorithme de chiffrement prenant pour clef l'identifiant principal haché reçu des moyens 54 d'acquisition et de traitement de l'identifiant principal pour fournir une clef de chiffrement signée chiffrée, qui constitue la donnée de sécurité.

Les deuxièmes moyens de stockage 53, propres à stocker la donnée de sécurité, sont connectés aux moyens de génération 52 de la donnée de sécurité. Ils sont prévus dans la carte SIM 5, en particulier dans la partition sécurisée de celle-ci.

Dans le mode de réalisation décrit, l'algorithme de chiffrement mis en oeuvre par les moyens de génération 52 de la donnée de sécurité est un algorithme symétrique, en particulier un algorithme de type AES (standard de chiffrement avancé).

Le module d'authentification 41 est représenté plus en détail sur la figure 3. Il est propre à authentifier, à partir de la donnée de sécurité, l'identifiant principal saisi par l'utilisateur. Il est apte à recevoir en entrée cet identifiant principal par l'intermédiaire de l'interface homme-machine 11. Il comprend un troisième module de hachage 74 propre à appliquer à l'identifiant principal saisi la même fonction de hachage que le premier module de hachage 57 pour fournir en sortie un identifiant principal haché.

Un module de déchiffrement 77 est apte à appliquer, pour déchiffrer la donnée de sécurité stockée dans les deuxièmes moyens de stockage 53, le même algorithme que les moyens de génération 52 de la donnée de sécurité. Il est apte à appliquer à la donnée de sécurité l'algorithme de chiffrement, en prenant comme clef l'identifiant principal haché provenant du troisième module de hachage 74, de manière à fournir en sortie une clef de chiffrement signée déchiffrée comprenant une clef de chiffrement déchiffrée concaténée avec sa signature déchiffrée.

Un second calculateur 80 est propre à séparer la clef de chiffrement déchiffrée de la signature déchiffrée. Cette clef de chiffrement déchiffrée, fournie à la sortie du module d'authentification 41, est la clef de chiffrement utilisée par les moyens de chiffrement 23 pour chiffrer les identifiants particuliers. Le module d'authentification 41 est ainsi propre à extraire, à l'aide de l'identifiant principal saisi par l'utilisateur, la clef de chiffrement de la donnée de sécurité stockée par les deuxièmes moyens de stockage 53.

Un quatrième module de hachage 83 est propre à fournir une clef de chiffrement déchiffrée hachée en appliquant à la clef de chiffrement déchiffrée la même fonction de hachage que le second module de hachage 62.

Enfin, un comparateur 86 est propre à comparer la clef de chiffrement déchiffrée hachée à la signature déchiffrée et à conclure à l'authenticité de l'identifiant principal saisi, c'est-à-dire son identité avec l'identifiant principal choisi, utilisé par les moyens de génération 52 pour générer la donnée de sécurité, si la clef de chiffrement déchiffrée hachée est identique à la signature déchiffrée.

Les moyens de chiffrement 23 sont aptes à chiffrer l'identifiant particulier mémorisé par les moyens de mémorisation 44 à l'aide de la donnée de sécurité. A cet effet, ils reçoivent en entrée la clef de chiffrement déchiffrée fournie à la sortie du module d'authentification 41 et sont propres à appliquer à l'identifiant particulier un algorithme de chiffrement prenant comme clef cette clef de chiffrement.

Selon un mode de réalisation, et comme illustré sur la figure 2, le téléphone mobile 2 comprend un module de modification 92, propre à permettre la modification par l'utilisateur de son identifiant principal. Le module de modification 92 est propre à recevoir des instructions de modification par l'intermédiaire de l'interface homme-machine 11. Il est propre à être mis en oeuvre lors de la mise en oeuvre des moyens de saisie 27 de l'identifiant principal. Ainsi, l'utilisateur peut, par l'intermédiaire du module de modification 92, modifier son identifiant principal à chaque fois que les moyens de saisie 27 de l'identifiant principal sont mis en oeuvre.

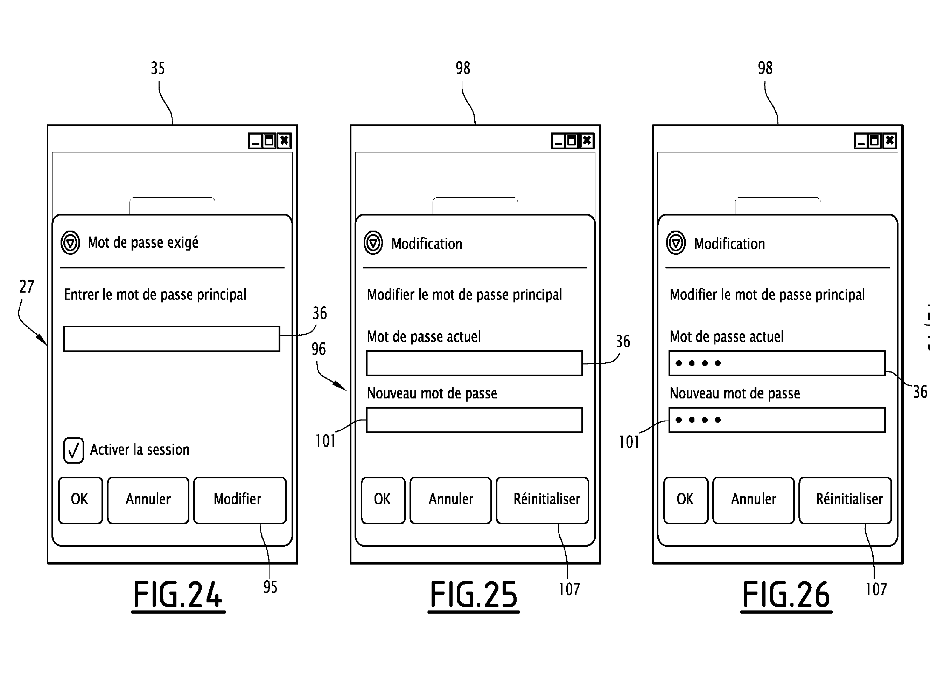

A cet effet, un bouton de modification 95, par exemple compris dans la fenêtre de saisie 35 de l'identifiant principal, est propre à être activé par l'utilisateur lorsque celui-ci souhaite modifier l'identifiant principal. Dans ce mode de réalisation, les moyens de déclenchement 24 sont aptes à déclencher automatiquement la mise en oeuvre de moyens de modification 96, lorsque l'utilisateur active le bouton de modification 95. Les moyens de modification 96 comprennent une zone de saisie 36 de l'identifiant principal actuel et une zone de saisie 101 d'un nouvel identifiant principal, notamment compris dans une fenêtre de modification 98 (figure 25).

Le module d'authentification 41 est propre à authentifier l'identifiant principal actuel saisi et à fournir, à sa sortie, la clef de chiffrement déchiffrée. Le module de modification 92 est propre à commander la génération d'une nouvelle donnée de sécurité par les moyens de génération 52 de la donnée de sécurité, à partir de la clef de chiffrement déchiffrée fournie en sortie du module d'authentification 41 et du nouvel identifiant principal choisi par l'utilisateur, la nouvelle donnée de sécurité étant stockée par les deuxièmes moyens de stockage 53 à la place de la donnée de sécurité précédente.

Selon un mode de réalisation, le téléphone mobile 2 comprend des moyens de réinitialisation 105, propres à permettre la réinitialisation de l'identifiant particulier. Les moyens de réinitialisation 105 sont propres à recevoir une instruction de réinitialisation par l'intermédiaire de l'interface homme-machine 11. A cet effet, un bouton de réinitialisation 107, par exemple compris dans la fenêtre de saisie 35 de l'identifiant principal ou dans la fenêtre de modification 98 (figure 25), est propre à être activé par l'utilisateur lorsque celui-ci souhaite réinitialiser l'identifiant principal. Les moyens de réinitialisation 105 sont propres à effacer la donnée de sécurité, ainsi que tous les identifiants particuliers et URL associées de la base de données 20.

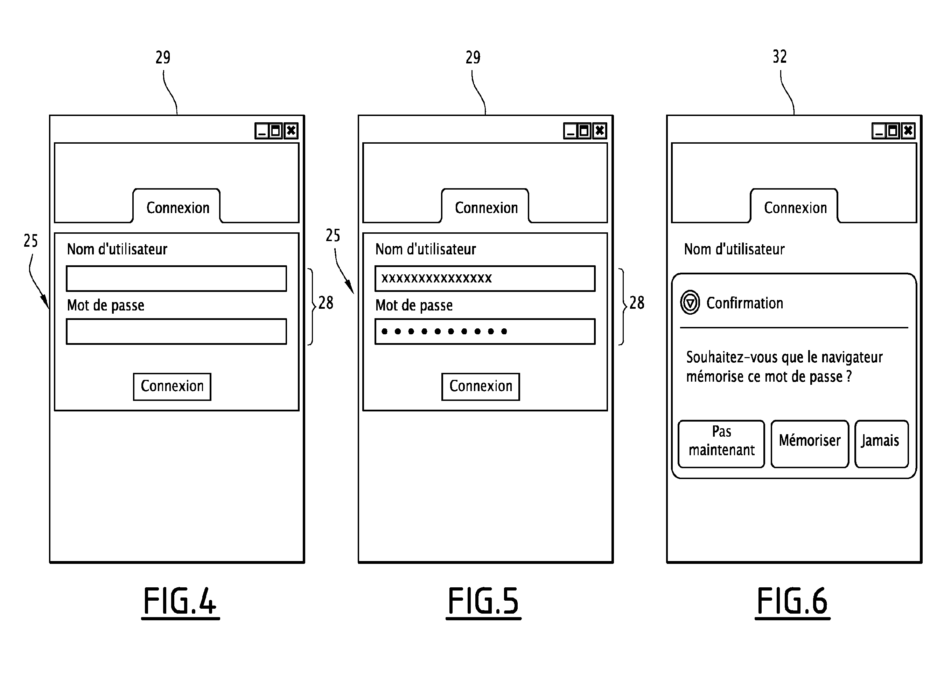

Les figures 4 à 9 représentent une première situation dans laquelle, lors de la connexion à la page 110, l'identifiant principal n'a pas encore été choisi et l'identifiant particulier n'est pas stocké dans la base de données 20.

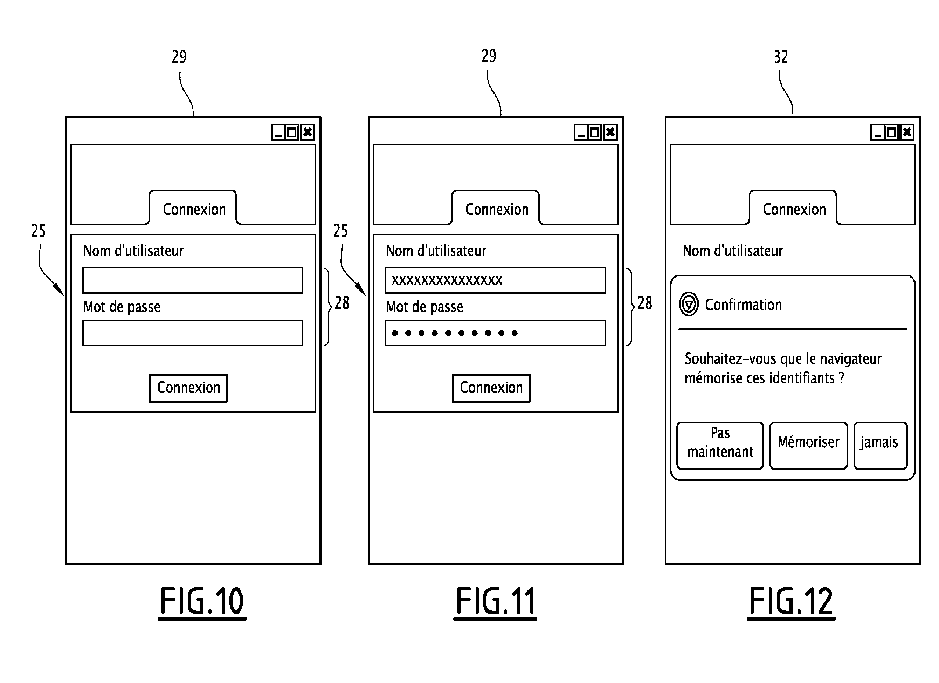

Les figures 10 à 15 représentent une deuxième situation dans laquelle, lors de la connexion à la page 110, l'identifiant principal a déjà été choisi, mais l'identifiant particulier n'est pas stocké dans la base de données 20.

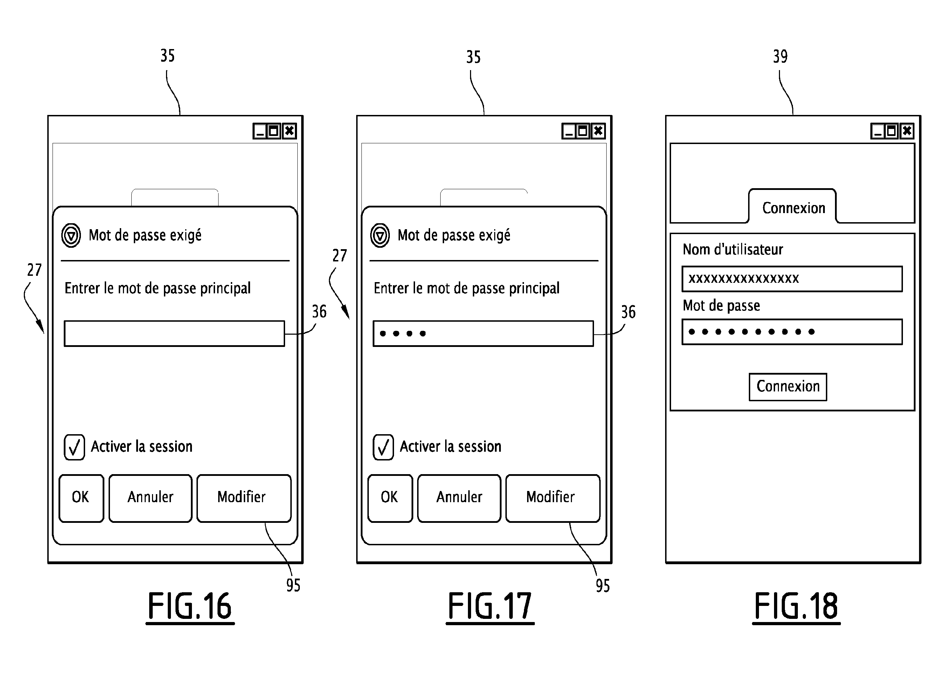

Les figures 16 à 19 représentent une troisième situation dans laquelle, lors de la connexion à la page 110, l'identifiant principal a déjà été choisi et l'identifiant particulier est stocké dans la base de données 20.

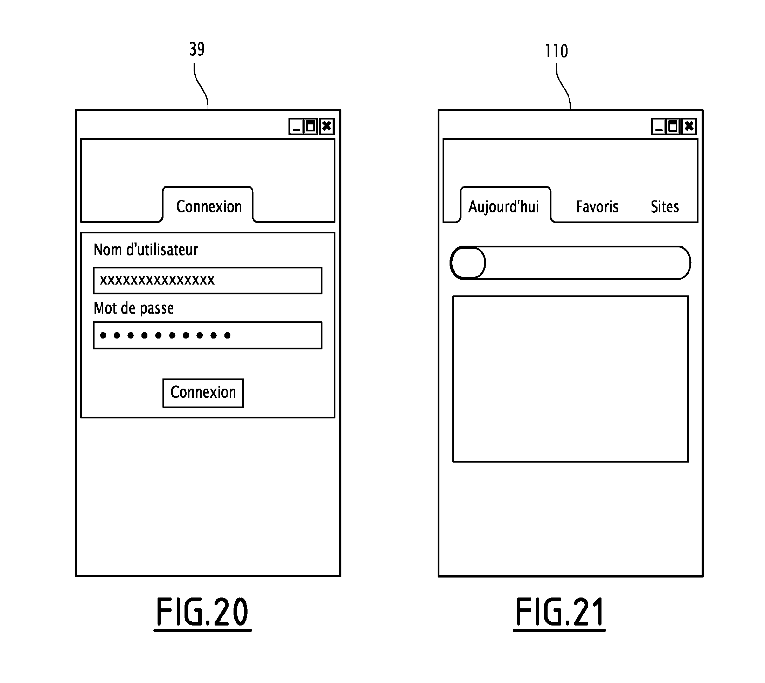

Les figures 20 et 21 représentent une quatrième situation dans laquelle, lors de la connexion à la page 110, l'identifiant principal a déjà été choisi, l'identifiant particulier est stocké dans la base de données 20 et une session est activée.

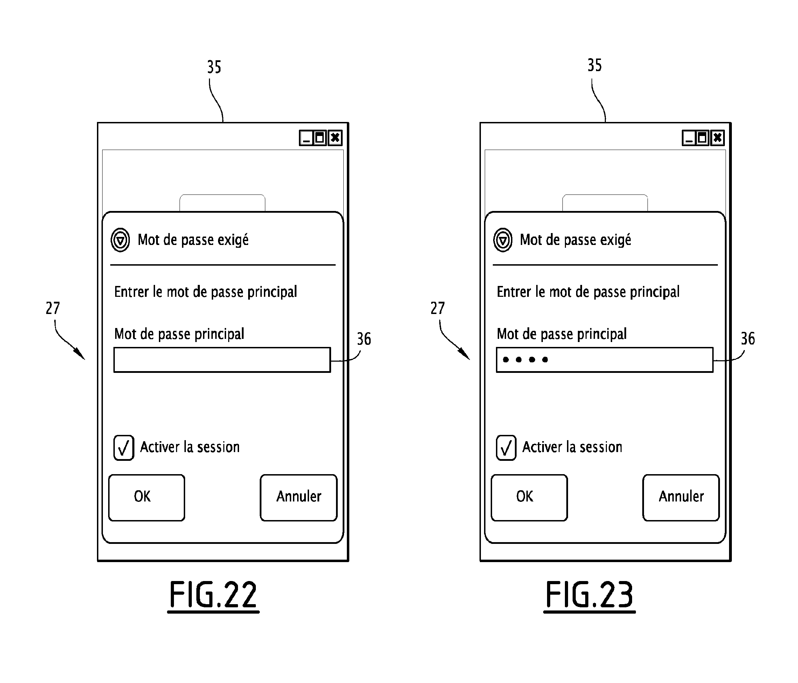

Les figures 22 et 23 représentent une cinquième situation dans laquelle une session était activée et a expiré.

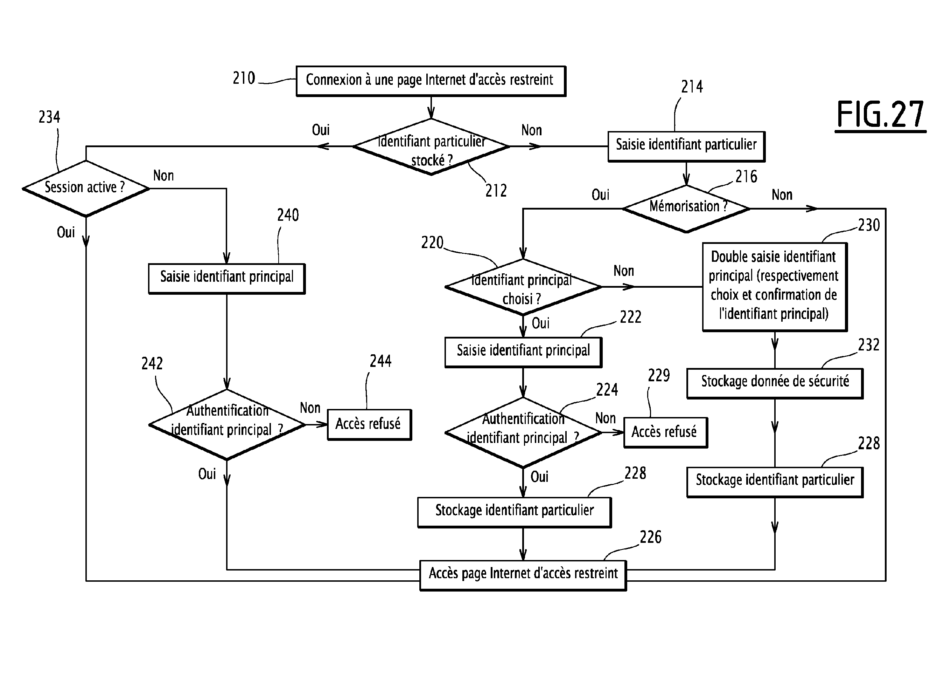

Le procédé de connexion sécurisée à une page à accès restreint 110 va maintenant être expliqué dans différentes situations à l'aide des figures 4 à 23, et en référence à la figure 27.

Au cours d'une étape 210 de connexion, le navigateur web 14 se connecte à la page Internet d'accès restreint 110 choisie par l'utilisateur. Le module de recherche 40 recherche alors, dans une étape de recherche 212, si l'URL de cette page 110 est stockée dans la base de données 20 en comparant les URL stockées dans la base de données 20 à l'URL active.

Si le module de recherche 40 constate, lors du test à l'étape 212, que l'URL active n'est pas encore stockée dans la base de données 20 (figures 4 à 9 et 10 à 15), il active les moyens de déclenchement 24, qui déclenchent la mise en oeuvre des moyens de saisie 25 de l'identifiant particulier, prévus dans la fenêtre de saisie 29 de l'identifiant particulier (figures 4 / 10). Dans une étape 214, l'utilisateur saisit l'identifiant particulier correspondant à l'URL active (figures 5 / 11). Dans une étape 216, il choisit s'il souhaite que l'identifiant particulier soit mémorisé (figures 6 / 12).

En cas de réponse positive à l'étape 216, le téléphone 2 vérifie, dans une étape 220 de vérification, si l'identifiant principal a déjà été choisi, par exemple en vérifiant si une donnée de sécurité est stockée dans les deuxièmes moyens de stockage 53.

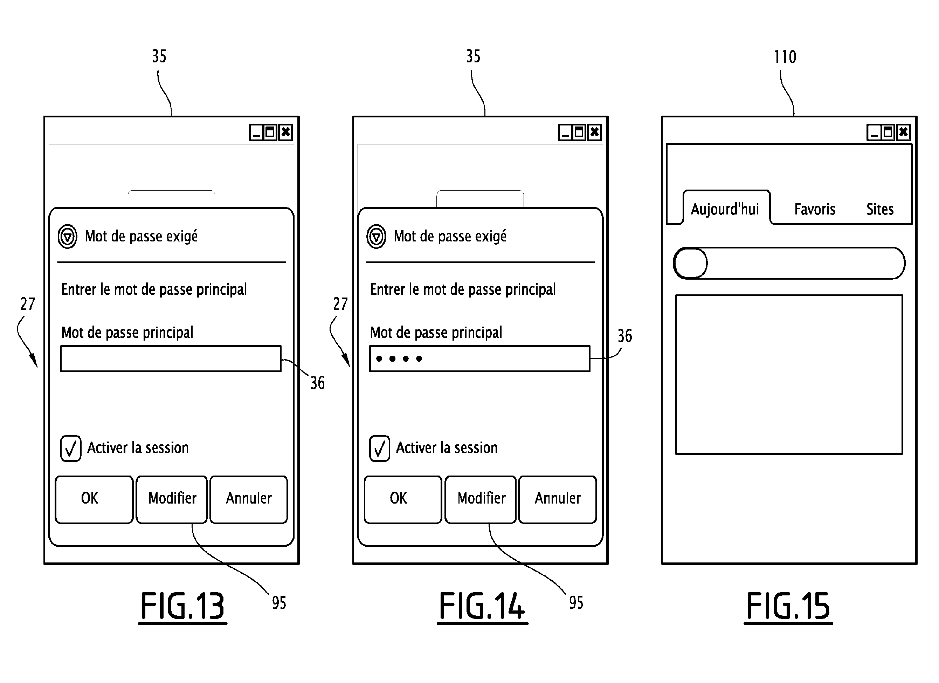

En cas de réponse positive au test de l'étape 220, c'est-à-dire si un identifiant principal a déjà été choisi, les moyens de déclenchement 24 déclenchent automatiquement et systématiquement la mise en oeuvre des moyens de saisie 27 de l'identifiant principal, prévus dans la fenêtre de saisie 35 de l'identifiant principal (figure 13). L'utilisateur saisit alors, dans une étape 222, son identifiant principal par l'intermédiaire des moyens de saisie 27 (figure 14).

Le module d'authentification 41 authentifie alors, dans une étape 224, l'identifiant principal saisi à l'étape 222.

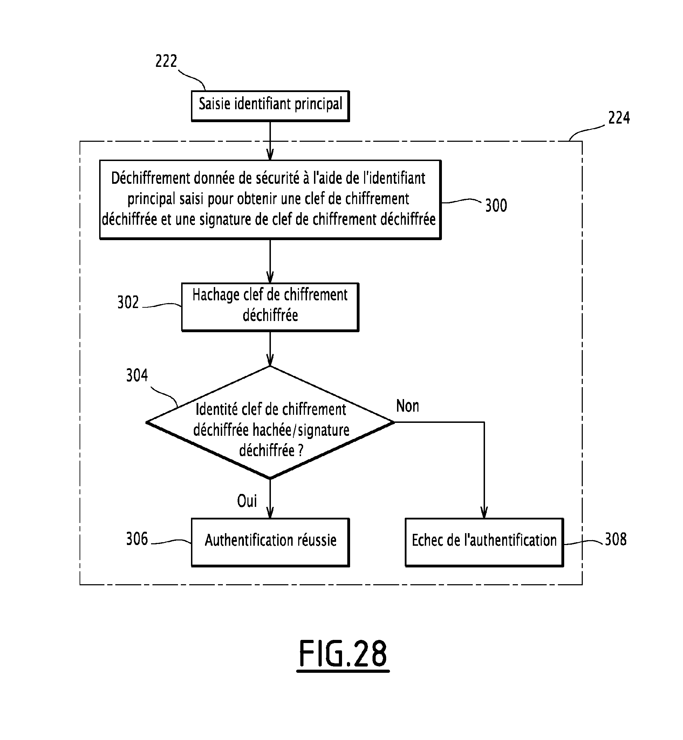

Le procédé d'authentification de l'identifiant principal, mis en oeuvre dans l'étape 224 par le module d'authentification 41 est expliqué en référence à la figure 28. Le module d'authentification 41 déchiffre, dans une étape 300, la donnée de sécurité stockée par les deuxièmes moyens de stockage 53 à l'aide de l'algorithme de chiffrement, prenant comme clef l'identifiant principal haché, obtenu par hachage par le module de hachage 74 de l'identifiant principal saisi à l'étape 222. Il obtient ainsi une clef de chiffrement déchiffrée, associée à une signature déchiffrée. Il hache alors, dans une étape 302, la clef de chiffrement déchiffrée, extraite de la donnée de sécurité à l'étape 300, puis compare, dans une étape 304, la clef de chiffrement déchiffrée hachée à la signature déchiffrée. En cas d'identité de la clef de chiffrement extraite de la donnée de sécurité et hachée avec la signature extraite de la donnée de sécurité, le module d'authentification 41 authentifie l'identifiant principal dans une étape 306.

En cas d'authentification positive à l'issue de l'étape 224, le module d'authentification 41 autorise, dans une étape 226, l'accès à la page Internet 110 (figure 15).

Uniquement après saisie et authentification de l'identifiant principal, les moyens de mémorisation 44 mémorisent l'identifiant particulier. Les moyens de chiffrement 23 chiffrent ensuite l'identifiant particulier à l'aide de la clef de chiffrement, extraite de la donnée de sécurité par le module d'authentification 41 au cours de l'étape 300 du processus d'authentification de l'identifiant principal, mis en oeuvre lors de l'étape 224.

Les moyens de chiffrement 23 chiffrent l'identifiant particulier mémorisé par les moyens de mémorisation 44 à l'aide de l'algorithme de chiffrement, prenant comme clef la clef de chiffrement extraite de la donnée de sécurité par le module d'authentification 41 au cours de l'étape 300 du procédé d'authentification.

Enfin, les premiers moyens de stockage 17 stockent, dans une étape 228, l'identifiant particulier chiffré dans la base de données 20, en l'associant à l'URL de la page active 110.

En cas de réponse négative au test de l'étape 224, c'est-à-dire en cas d'échec de l'authentification, le module d'authentification refuse, dans une étape 229, l'accès à la page 110.

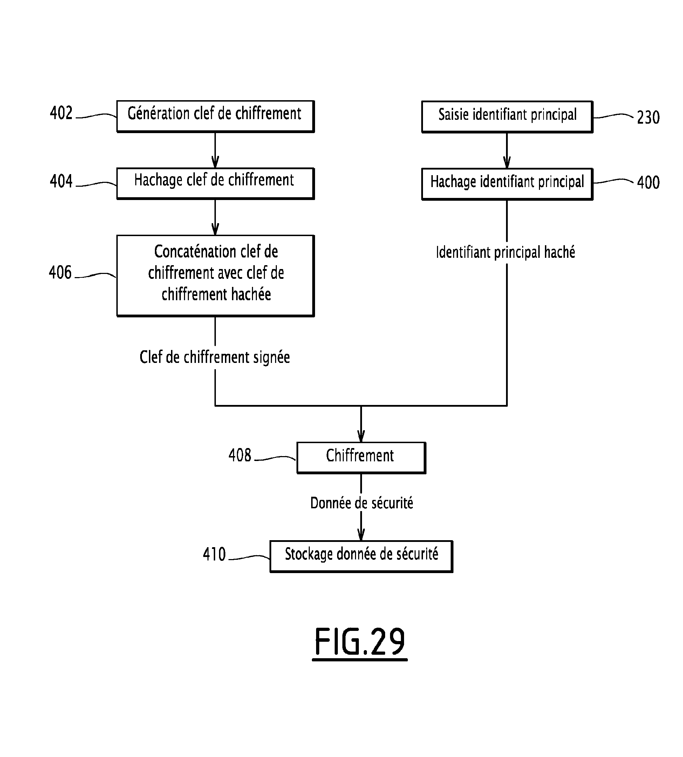

En cas de réponse négative au test de l'étape 220, c'est-à-dire si l'identifiant principal n'a pas encore été choisi, les moyens de déclenchement 24 déclenchent automatiquement et systématiquement la mise en oeuvre des moyens de choix 34 de l'identifiant principal, prévus dans la fenêtre de saisie initiale 37 (figure 7). L'utilisateur choisit alors, dans une étape 230, son identifiant principal, en le saisissant par l'intermédiaire des moyens de choix 34 de l'identifiant principal. Il confirme son choix en saisissant à nouveau l'identifiant principal dans la zone de confirmation 37 (figure 8). Simultanément ou précédant l'étape 228 de stockage de l'identifiant particulier, les deuxièmes moyens de stockage 53 stockent alors, dans une étape 232, la donnée de sécurité, qui dépend de l'identifiant principal. La donnée de sécurité est obtenue à partir de l'identifiant principal selon un procédé représenté schématiquement à la figure 29. Les moyens de génération 52 de la donnée de sécurité génèrent la donnée de sécurité à partir de l'identifiant principal saisi et d'une clef de chiffrement aléatoire. A cet effet, les moyens 54 d'acquisition et de traitement de l'identifiant principal hachent, dans une étape 400, l'identifiant principal saisi à l'étape 230. Dans une étape 402, les moyens 55 de génération de la clef de chiffrement génèrent aléatoirement une clef de chiffrement, ils déterminent dans une étape 404 la signature de la clef de chiffrement et concatènent, dans une étape 406, la clef avec sa signature pour générer une clef signée. Les moyens de génération 52 de la donnée de sécurité chiffrent alors, dans une étape 408, cette clef de chiffrement signée à l'aide de l'algorithme de chiffrement, prenant comme clef de chiffrement l'identifiant principal haché, générant ainsi la donnée de sécurité. Les deuxièmes moyens de stockage 53 stockent ensuite la donnée de sécurité dans une étape 410.

L'identifiant particulier est alors chiffré par les moyens de chiffrement 23, à l'aide d'un algorithme prenant comme clef la clef aléatoire de chiffrement, puis stocké sous forme chiffrée à l'étape 228. Le navigateur web 14 peut alors accéder à la page 110 au cours de l'étape 226 (figure 9).

Si l'utilisateur choisit d'activer une session, par exemple en activant, lors de la saisie de l'identifiant principal, l'option d'activation de session, prévue par exemple dans la fenêtre de saisie 35 de l'identifiant principal ou dans la fenêtre de saisie initiale 37, les moyens d'activation de session 47 déclenchent l'horloge 50 et commandent l'enregistrement dans la mémoire vive 12 du téléphone 2 de la clef de chiffrement extraite de la donnée de sécurité par le module d'authentification 41 à l'étape 300 ou conservent dans la mémoire vive 12 la clef de chiffrement générée par les moyens 55 de génération de la clef de chiffrement au cours de l'étape 402. En variante, la clef de chiffrement est toujours dans la mémoire vive 12 et la clef de chiffrement est rendue accessible pour le déchiffrement d'un identifiant particulier lors de l'activation d'une session, sans que l'identifiant principal ne doive être ressaisi.

Si lors de l'étape 212 de recherche, le module 40 de recherche constate que l'URL active est déjà stockée dans la base de données 20 (figures 16 à 19), le téléphone 2 vérifie, dans une étape 234, si une session est active.

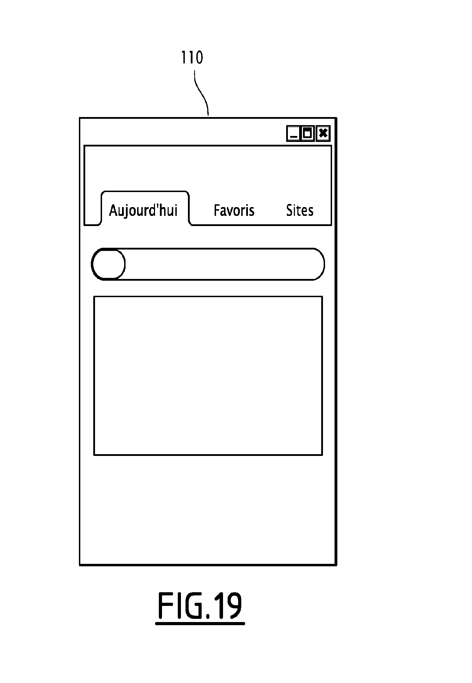

En cas de réponse négative au test de l'étape 234, c'est-à-dire si aucune session n'est active, le module de recherche 40 active les moyens de déclenchement 24, qui déclenchent automatiquement la mise en oeuvre des moyens de saisie 27 de l'identifiant principal, sans mise en oeuvre préalable des moyens de saisie 25 de l'identifiant particulier (figure 16). Dans une étape 240, l'utilisateur saisit l'identifiant principal (figure 17). Dans une étape 242, identique à l'étape 224, le module d'authentification 41 vérifie l'exactitude de l'identifiant principal saisi. En cas de réponse positive au test de l'étape 242, c'est-à-dire en cas d'authentification réussie, les moyens de chiffrement 23 déchiffrent l'identifiant particulier associé à l'URL active à l'aide de la clef de chiffrement, extraite de la donnée de sécurité par le module d'authentification 41. Les moyens de déclenchement 24 déclenchent ensuite l'affichage de la fenêtre 39 préremplie avec l'identifiant particulier déchiffré (figure 18), permettant ainsi l'accès à la page 110 (figure 19) à l'étape 226.

En cas d'échec de l'authentification à l'étape 242, le module d'authentification 41 refuse, dans une étape 244, l'accès à la page 110.

Si une session active est détectée à l'étape 234 (figures 20 et 21), dès que le navigateur 14 se connecte à la page 110 d'accès restreint choisie par l'utilisateur, les moyens de déchiffrement 23 déchiffrent l'identifiant particulier correspondant stocké dans la base de données 20 à l'aide de la clef de chiffrement enregistrée préalablement dans la mémoire vive 12. Les moyens de déclenchement 24 déclenchent alors automatiquement l'affichage de la fenêtre 39 préremplie avec l'identifiant particulier déchiffré correspondant à l'URL saisie (figure 20), permettant ainsi l'accès à la page 110 (figure 23), sans mise en oeuvre préalable des moyens de saisie 27 de l'identifiant principal.

Lorsque la durée prédéterminée de session s'est écoulée, la session expire et les moyens de déclenchement 24 déclenchent la mise en oeuvre des moyens de saisie 27 de l'identifiant principal, prévus dans la fenêtre 35 de saisie de l'identifiant principal (figure 22), l'accès à la page 110 étant permis seulement après saisie de l'identifiant principal par l'utilisateur (figure 23) et vérification de son exactitude par le module d'authentification 41. En cas de non exactitude de l'identifiant principal saisi, les accès à toutes les pages actuellement utilisées sont interrompus.

Les figures 24 à 26 représentent la situation dans laquelle un utilisateur souhaite modifier son identifiant principal.

Lorsque l'utilisateur souhaite modifier son identifiant principal, il active le module de modification 92, par exemple en cliquant sur le bouton de modification 95 de l'interface homme-machine 11. Les moyens de déclenchement 24 déclenchent alors la mise en oeuvre des moyens de modification 96, prévus dans la fenêtre de modification 98 (figure 25). L'utilisateur saisit alors son identifiant principal actuel et son identifiant principal souhaité par l'intermédiaire des moyens de modification 96, c'est-à-dire en les saisissant respectivement dans la zone de saisie 36 de l'identifiant principal et dans la zone de saisie du nouvel identifiant principal 101 (figure 26). Le module d'authentification 41 authentifie alors l'identifiant principal saisi. En cas d'authentification réussie, le module de modification 92 modifie l'identifiant principal en commandant la génération d'une nouvelle donnée de sécurité par les moyens de génération 52 de la donnée de sécurité, à partir de la clef de chiffrement déchiffrée fournie en sortie du module d'authentification 41 et du nouvel identifiant principal choisi par l'utilisateur. A cet effet, les moyens de génération 52 de la donnée de sécurité reçoivent en entrée la clef de chiffrement extraite de la donnée de sécurité par le module d'authentification 41 à l'étape 300, ainsi que le nouvel identifiant principal saisi haché par le module de hachage 57. Ils chiffrent alors cette clef de chiffrement à l'aide de l'algorithme de chiffrement, prenant comme clef le nouvel identifiant principal haché. Ils engendrent ainsi une nouvelle donnée de sécurité. Celle-ci est stockée par les deuxièmes moyens de stockage 53 à la place de la donnée de sécurité précédente.

La sécurisation des identifiants de connexion par le téléphone mobile 2 selon l'invention est particulièrement importante. Ni l'identifiant principal, ni la clef de chiffrement utilisée pour chiffrer les identifiants particuliers avant leur stockage dans la base de données, ne sont enregistrés en tant que tels dans la mémoire ROM du téléphone ou sur la carte SIM. En effet, la clé de chiffrement est mémorisée sous forme chiffrée au moyen de l'identifiant principal. Ainsi, l'identifiant principal n'est mémorisé que temporairement lors de sa première saisie dans la mémoire vive du téléphone pour permettre le chiffrement de la clef de chiffrement. Pour son authentification, l'identifiant principal saisi par l'utilisateur lors d'une connexion ultérieure est utilisé pour déchiffrer la clef de chiffrement, cette dernière étant ensuite comparée à sa signature, stockée et déchiffrée avec la clef de chiffrement, pour conclure à l'exactitude de l'identifiant principal.

Le chiffrement des identifiants particuliers se fait au moyen de la clef de chiffrement, déchiffrée préalablement à l'aide de l'identifiant principal saisi. Ainsi, le déchiffrement des identifiants particuliers nécessite la connaissance de l'identifiant principal, qui ne peut être déduit simplement des données stockées dans la mémoire ROM du téléphone.

Le fait que la base de données et la donnée de sécurité soient enregistrées sur la carte SIM et non dans la mémoire ROM du téléphone lui-même participe également à la sécurisation des identifiants.

En outre, la mise en oeuvre automatique des moyens de choix ou de saisie de l'identifiant principal lorsque l'utilisateur indique qu'il souhaite que son identifiant particulier soit mémorisé augmente la convivialité d'utilisation du système, puisque aucune manipulation, autre que celles engendrées automatiquement par le téléphone, n'est nécessaire pour la mise en oeuvre de la mémorisation sécurisée de l'identifiant particulier.

Le seul identifiant que l'utilisateur doit mémoriser est l'identifiant principal, qui est identique pour toutes les pages Internet et qui peut être constitué de seulement quatre caractères, ce qui favorise sa facilité de mémorisation.

L'utilisateur peut également, à tout moment, modifier son identifiant principal, directement par l'intermédiaire de la fenêtre de saisie de l'identifiant principal, puisque celle-ci comporte une option de modification de l'identifiant principal. Aucune manipulation en dehors des fenêtres déclenchées automatiquement n'est donc nécessaire.

Enfin, la convivialité est également apportée par la possibilité proposée par le téléphone d'activer une session, pendant la durée de laquelle il n'est plus nécessaire de saisir l'identifiant principal.

## Revendications

1. Téléphone mobile (2) du type comprenant
- des moyens de connexion (14), propres à permettre la connexion à une page Internet (110) d'URL déterminée, la connexion à ladite page Internet (110) requérant la saisie d'un identifiant particulier propre à ladite page Internet (110),
- des premiers moyens de stockage (17), propres à stocker dans une base de données (20) les identifiants particuliers, associés chacun à une page Internet correspondante,
**caractérisé en ce que** le téléphone (2) comprend en outre
- des moyens de déclenchement (24) propres à déclencher systématiquement et automatiquement, à l'issue de la saisie d'un identifiant particulier, la mise en oeuvre de moyens de choix (34) d'un identifiant principal commun à toutes les pages Internet requérant la saisie d'un identifiant particulier, si aucun identifiant principal n'a encore été choisi, et
- des deuxièmes moyens de stockage (53) propres à stocker une donnée de sécurité dépendant de l'identifiant principal à l'issue de la saisie de l'identifiant principal.

2. Téléphone mobile (2) selon la revendication 1, **caractérisé en ce qu'**il comprend en outre des moyens de mémorisation (44) de l'identifiant particulier, propres à mémoriser l'identifiant particulier seulement si l'identifiant principal a été choisi et à engendrer le stockage dans la base de données (20) de l'identifiant particulier mémorisé par les premiers moyens de stockage (17).

3. Téléphone mobile (2) selon l'une des revendications 1 et 2, **caractérisé en ce que** les moyens de déclenchement (24) sont en outre propres à déclencher systématiquement et automatiquement la mise en oeuvre de moyens de saisie (27) de l'identifiant principal à l'issue de la saisie d'un identifiant particulier non encore stocké dans la base de données (20) et si l'identifiant principal a déjà été choisi, et **en ce qu'**il comprend des moyens de mémorisation (44) de l'identifiant particulier propres à mémoriser l'identifiant particulier seulement si l'identifiant principal a été saisi et à engendrer le stockage dans la base de données (20) de l'identifiant particulier mémorisé par les premiers moyens de stockage (17).

4. Téléphone mobile (2) selon la revendication 3, **caractérisé en ce qu'**il comprend des moyens de recherche (40), propres à déterminer la présence dans la base de données (20) de la page Internet (110) à laquelle les moyens de connexion (14) sont connectés, et donc de l'identifiant particulier associé, les moyens de recherche (40) étant propres à déclencher la mise en oeuvre de moyens de saisie (25) de l'identifiant particulier si l'identifiant particulier associé à la page Internet (110) n'est pas stocké dans la base de données (20) et la mise en oeuvre des moyens de saisie (27) de l'identifiant principal sans mise en oeuvre préalable de moyens de saisie (25) de l'identifiant particulier sinon.

5. Téléphone mobile (2) selon la revendication 4, **caractérisé en ce qu'**il comprend en outre des moyens d'activation de session (47) comprenant une horloge (50), propre à déterminer une durée écoulée depuis la dernière saisie d'un identifiant principal, des moyens de comparaison du temps écoulé déterminé par l'horloge (50) avec un temps prédéterminé, les moyens d'activation de session (47) étant propres à donner l'identifiant particulier sans saisie préalable de l'identifiant principal si le temps écoulé est inférieur au temps prédéterminé.

6. Téléphone mobile (2) selon l'une quelconque des revendications 3 à 5, **caractérisé en ce qu'**il comprend en outre un module de modification (92) de l'identifiant principal, propre à être mis en oeuvre lors de la mise en oeuvre des moyens de saisie (27) de l'identifiant principal.

7. Téléphone mobile (2) selon l'une quelconque des revendications précédentes, **caractérisé en ce que** les moyens de déclenchement (24) sont en outre propres à déclencher automatiquement la mise en oeuvre de moyens d'interrogation (26) quant à la mémorisation de l'identifiant particulier saisi avant la mise en oeuvre des moyens de choix de l'identifiant principal (34).

8. Téléphone mobile (2) selon l'une quelconque des revendications précédentes, **caractérisé en ce que** les identifiants particuliers sont stockés dans la base de données (20) sous forme chiffrée à l'aide d'une clef de chiffrement aléatoire.

9. Téléphone mobile (2) selon la revendication 8, **caractérisé en ce qu'**il comprend en outre des moyens de génération de la donnée de sécurité (52), propres à chiffrer la clef de chiffrement de l'identifiant particulier à l'aide de l'identifiant principal, de manière à générer la donnée de sécurité stockée par les deuxièmes moyens de stockage (53).

10. Téléphone mobile (2) selon l'une des revendications 8 et 9, **caractérisé en ce qu'**il comprend en outre des moyens de chiffrement (23) propres à chiffrer l'identifiant particulier, mémorisé par les moyens de mémorisation (44), au moyen de la clef de chiffrement aléatoire, la clef de chiffrement aléatoire ayant préalablement été déchiffrée à partir de la donnée de sécurité à l'aide de l'identifiant principal saisi.

11. Téléphone mobile (2) selon l'une quelconque des revendications 8 à 10, **caractérisé en ce qu'**il comprend une carte SIM (5) et **en ce que** les premiers et deuxièmes moyens de stockage (17, 53) sont prévus sur la carte SIM (5).

12. Procédé mis en oeuvre par le téléphone mobile (2) selon l'une quelconque des revendications précédentes, **caractérisé en ce qu'**il comprend successivement les étapes consistant à :
- se connecter par l'intermédiaire des moyens de connexion (14) du téléphone mobile (2) à une page Internet (110) ayant une URL déterminée et requérant la saisie d'un identifiant particulier ;
- déclencher la mise en oeuvre de moyens de choix (34) d'un identifiant principal à l'issue de la saisie d'un identifiant particulier, si aucun identifiant principal n'a encore été choisi ; et
- à l'issue de la saisie de l'identifiant principal, stocker à l'aide des deuxièmes moyens de stockage (53) une donnée de sécurité dépendant de l'identifiant principal.

13. Procédé selon la revendication 12, **caractérisé en ce qu'**il comprend, avant la mise en oeuvre des moyens de choix (34) de l'identifiant principal, une étape consistant à déclencher la mise en oeuvre de moyens d'interrogation (26), proposant à l'utilisateur de mémoriser l'identifiant particulier saisi.

14. Produit programme d'ordinateur comportant des instructions qui, lorsque mises en oeuvre par un calculateur intégré à un téléphone mobile (2), met en oeuvre le procédé selon l'une des revendications 12 et 13.
